# EUROPEAN PATENT APPLICATION

(11) **EP 1 519 463 A1**
(43) Date of publication of application: **30.03.2005**
(21) Application number: 04077578.5
(22) Date of filing: 16.09.2004
(51) Int. Cl.: H02G 3/04

(54) **Cable retainer for use in a cable duct**

(30) Priority: 26.09.2003 NL 1024390
(71) Applicant: B.V. Kunststoffenindustrie Attema, 4203 NJ Gorinchem (NL)
(72) Inventor: De Hoog, Antoine, 4213 DE Dalem (NL)
(74) Representative: van der Arend, Adrianus G.A.

(57) **Abstract**

Cable retainer (1, 15, 23, 33) for use in a cable duct (7, 19, 36), which has a bottom (8, 34) and two side walls (9, 19), comprising a base part (3, 16, 29) and at least one projecting part (4, 30) projecting from the base part. The projecting part is flexible and projects from a position on the base part such that it can be bent flexibly towards a wall of the duct to allow a cable (11, 12) to pass through between the other wall of the duct and the projecting part. The projecting part has a broadening (5) at a distance from the base part parallel with the bottom of the duct such that, by means of flexible bending of the projecting part, a cable can be inserted from outside the duct along the broadening into the duct, and the broadening prevents unwanted loss of the cable from the duct.

## Description

The invention relates to a cable retainer according to the preamble to claim 1.

A cable retainer of this type is known from practice. The known cable retainer, viewed in the longitudinal direction of a duct in which it is located, has a C-shape, the ends of which are located at a distance from one another which is less than the diameter of a cable which is to be contained in the retainer and which must be retained to prevent unwanted loss. A dimension of the cable retainer, viewed along the length of the duct, is small, for example approximately 1 cm. In order to use the known cable retainer, the ends of the walls of the duct must be bent towards one another and must extend towards one another over a distance which is such that the cable retainer can be retained between said ends of the walls and the bottom of the duct.

When using the known cable retainer, a first cable can easily be pushed through the gap left between the ends of said retainer. However, the insertion of a second cable is prevented since the end parts of the retainer cannot be bent inwards in such a way that the second cable can pass through and then still leave space to allow the end parts of the retainer to bend back, said end parts lying against or very close to the side walls of the duct. The side walls of the duct prevent adjacent-lying parts of the retainer from being bent away from one another. The only way to place a second cable in the retainer is therefore to bend away from the base part an end part of the retainer lying parallel thereto, press the second cable into the retainer and allow the end part to bend back. An installer needs to use two hands to carry out these actions. Since the installer does not then have a free hand to hold onto a fixed object while inserting the second cable, unwanted, unsafe situations could arise for the installer as a result.

The object of the invention is to eliminate the disadvantages of the known cable retainer.

This object is achieved according to the invention by producing a cable retainer according to claim 1.

An installer can hereby insert one or more cables into the retainer with one hand. The actions required for this purpose can be carried out more quickly and safely than if two hands need to be used.

Other characteristics and advantages of the invention will become clear from the following explanation of embodiments of the cable retainer according to the invention. In the drawing:
fig. 1 shows a front view of a first embodiment of a cable retainer according to the invention;
fig. 2 to 7 show specific examples of the insertion of cables into a cable duct in which the cable retainer according to Fig. 1 is inserted;
fig. 8 shows a perspective view of a second embodiment of the cable retainer according to the invention;
fig. 9 shows a plan view of the cable retainer shown in Fig. 8 which is inserted into a duct;
fig. 10 shows a front view of the cable retainer and the duct shown in Fig. 9;
fig. 11 shows a front view of a third embodiment of a cable retainer according to the invention, inserted into the duct thus formed;
fig. 12 shows a front view of a fourth embodiment of a cable retainer according to the invention, inserted into a duct; and
fig. 13 shows a cross section of a fifth embodiment of a cable retainer according to the invention.

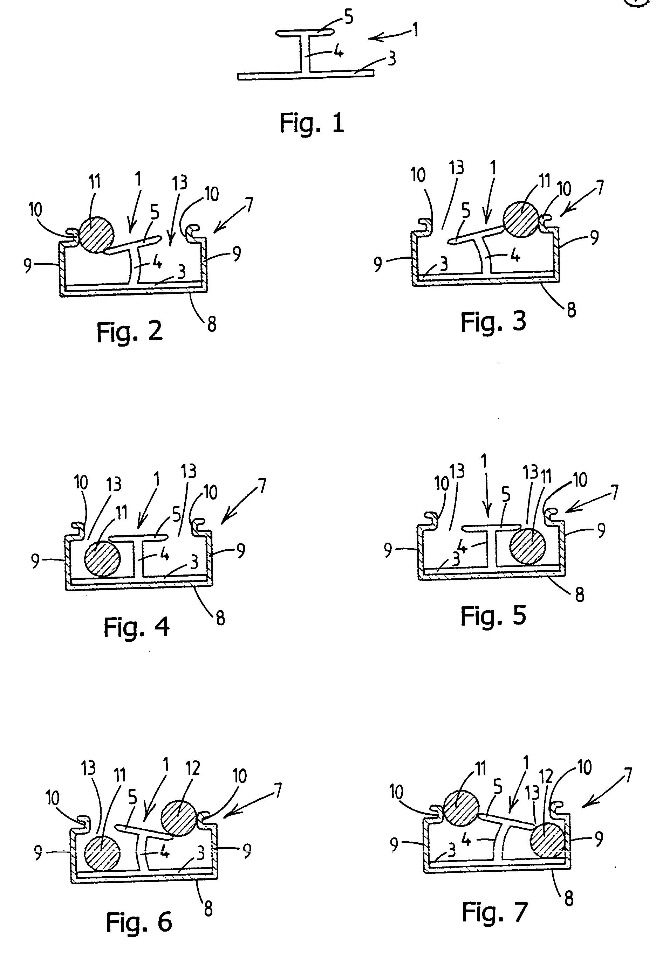

Fig. 1 shows a first embodiment 1 of a cable retainer according to the invention. The retainer 1 comprises a base part 3 and a projecting part 4 which projects from an intermediate area, for example the middle, of the base part 3, and which has a broadening 5 at a distance from the base part 3. The broadening 5 has, for example, the shape of a plate, of which the middle touches the remainder of the projecting part 4 and which is parallel with the base part 3.

The projecting part 4 of the cable retainer is flexible.

Fig. 2 to 7 show the cable retainer 1 in Fig. 1 which is inserted in a cable duct 7. The cable duct 7 has a bottom 8 and side walls 9. Fig. 2 to 7 further show a first cable 11 and a second cable 12. In the example shown in Fig. 2 to 7, the base part 3 is retained in the duct 7 by means of frictional forces with the side walls 9 of the duct 7. The broadening 5 extends from the projecting part 4 towards the side walls 9 of the duct 7 to the extent that a space 13 which is left free between them is smaller in a rest position than the diameter of the cables 11 and 12.

In order to insert the first cable 11 in the duct 7 and have it retained by the retainer 1, the projecting part 4, as shown in Fig. 2 and 3, can be flexibly bent in different ways in order to increase the space 13. When the space 13 is rendered adequately large, the cable 11 can pass through and the projecting part 4 and the broadening 5 can flexibly rebound.

As a result, starting from the position shown in Fig. 2, the position shown in Fig. 4 is achieved and, starting from the position shown in Fig. 3, the position shown in Fig. 5 is achieved.

In order then to insert a second cable 12 in the duct 7 and have it retained by the retainer 1, the projecting part 4 can again be flexibly bent in different ways, as shown in Fig. 6 and 7. Again, the projecting part 4 is bent to the extent that the relevant space 13 becomes so large that it can allow the cable 12 to pass through, whereupon the projecting part 4 and the broadening 5 can rebound.

As a result of the situations shown in Fig. 2 and 6, it is not necessary for an installer to hold onto the broadening 5 in order to bend the projecting part 4 and/or the broadening 5. Instead, he can simply push the first cable 11 and the second cable 12 into the space between the base part 3 and the broadening 5 of the retainer 1. As a result, unsafe situations are avoided and cables can be quickly and economically inserted into ducts in the manner explained above.

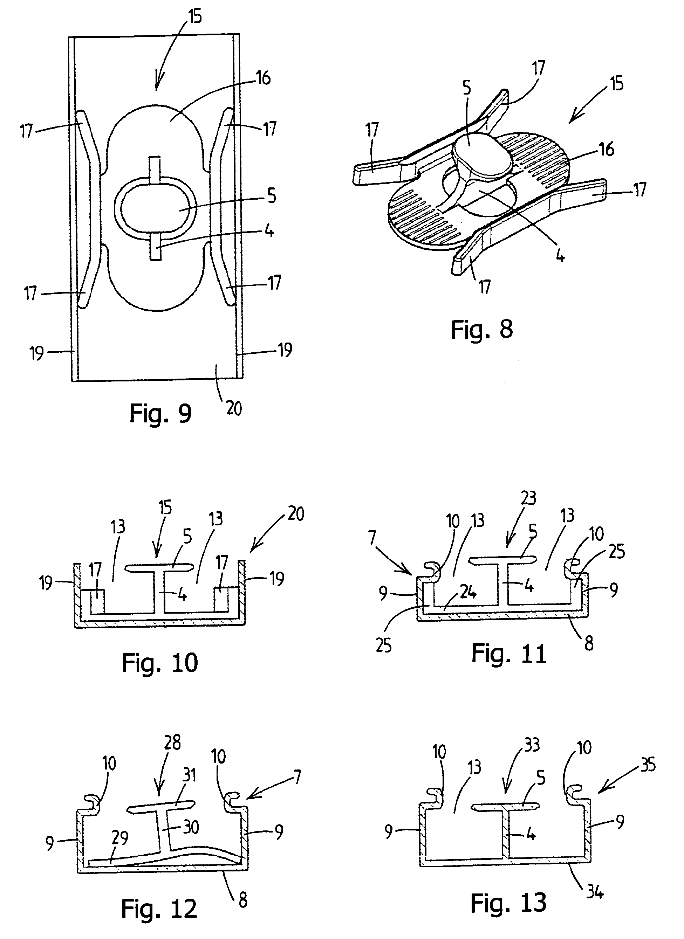

Fig. 8 shows a perspective view of a second embodiment 15 of the cable retainer according to the invention. The retainer 15 comprises a base part 16, from which, as in the case of the cable retainer 1 shown in Fig. 1, a projecting part 4 projects, which has a broadening 5. The base part 16, along its edges which, during use, are parallel with the longitudinal direction of the duct, has flexible legs 17, parallel with the base part 16, which stand out from one another in such a way that a dimension which spans two opposite legs 17 in the unused state of the cable retainer 15 is greater than a dimension between walls 19 of a duct 20 (see Fig. 9 and 10). As a result, the legs 17 push during use of the retainer 15 into the duct 20 with force against the inner walls 19, so that the retainer 15 is retained in the duct 20. The retainer 15 can easily be inserted into a duct 20 without ends pointing towards one another or into a duct 7 with ends pointing towards one another.

The third embodiment 23 of the cable retainer according to the invention, shown in Fig. 11, differs from the cable retainer 1 according to Fig. 1 to 7 in that a base part 24 has projecting parts 25 along two opposite edges, which are suitable for preventing loss, following insertion of the cable retainer 23 into a duct 7 with ends 10 pointing towards one another, between the bottom 8 and the ends 10 of the duct 7.

The fourth embodiment 28 of the cable retainer according to the invention shown in Fig. 12 differs from the retainer 1 shown in Fig. 1 to 7 in that the retainer 28 has a flexible base part 29, a projecting part 30 and a broadening 31 at the end of the projecting part 30. The projecting part 30 and the broadening 31 can be flexible, similar to the projecting part 4 and the broadening 5 of the retainer 1. It must be noted that Fig. 12 shows the retainer 28 in a position which is not a final position or rest position. In a rest position, the base part 29 in fact lies essentially flat against the bottom 8 of the duct 7 and presses with the side edges thereof against the walls 9 of the duct 7.

The fifth embodiment 33 of the cable retainer according to the invention shown in Fig. 13 differs from the retainer 1 according to Fig. 1 in that the base part 3 thereof is integrated with the bottom 34 of a duct 35. The cable retainer 33 therefore forms part of the profile of a duct 35.

Various combinations and modifications of the characteristics of the cable retainer according to the invention, as explained above, are possible within the scope of the claims.

Depending on the width of the ducts and the number of cables to be inserted, each of the explained cable retainers can be extended, for example, with a plurality of projecting parts with broadenings at their ends in order to accommodate and retain a cable on both sides of each projecting part. Two cables can then be accommodated and secured between two such adjacent projecting parts.

Furthermore, the legs 17 of the retainer 15 would not have to protrude above the base part 16 but can, with a suitable choice of material, shape and dimensions, lie entirely in the plane of the base part 16.

## Claims

1. Cable retainer for use in a cable duct which has a bottom, two side walls and an open side opposite the bottom, comprising a base part and at least one projecting part projecting from the base part, which is at least partially flexible, whereby the projecting part has a broadening, at a distance from the base part, parallel with the bottom of the duct such that, by means of flexible bending of the projecting part from outside the duct, a cable can be inserted along the broadening into the duct, and the broadening prevents unwanted loss of the cable from the duct, **characterized in that** the at least one projecting part projects from a position of the base part in such away that it can be bent flexibly towards a wall of the duct to allow the cable to pass through between the other wall of the duct and the projecting part, and whereby the broadening extends on both sides of the projecting part in order to prevent loss of a cable inserted between the base part and broadening.

2. Cable retainer according to claim 1, **characterized in that** the base part is suitable to be retained between the walls of the duct by means of friction with the walls of the duct.

3. Cable retainer according to claim 1 or 2, **characterized in that** the base part has a dimension across the duct which, when not in use in the duct, is greater than a distance between parts of the walls of the duct which are located at a greater distance from the bottom than the base part.

4. Cable retainer according to a preceding claim, **characterized in that** the edges of the base part which are essentially parallel with the longitudinal direction of the duct during use are elastic and press against the walls during use.

5. Cable retainer according to claim 4, **characterized in that** the base part is flexible in such a way that it also bends along with the projecting part.

6. Cable retainer according to claim 4 or 5, **characterized in that** the elastic edges, in a direction parallel with the projecting part, have a dimension which is essentially the same as the height of the inner sides of the walls of the duct.

7. Cable retainer according to a preceding claim, **characterized in that** the broadening of the projecting part is an essentially flat part with rounded corners which is parallel with the base part.

8. Cable retainer according to claim 7, **characterized in that** a dimension of the projecting part which is parallel with the longitudinal direction of the duct gradually increases from the broadening to the base part.

9. Cable retainer according to a preceding claim, **characterized in that** a plurality of projecting parts project from the base part, each of which is suitable for inserting a cable on both sides thereof and retaining said cable to prevent unwanted loss.

10. Cable retainer according to a preceding claim, **characterized in that** the retainer is integrated with the duct, whereby the base part forms part of the bottom of the duct.
